# EUROPEAN PATENT SPECIFICATION

(11) **EP 3 240 818 B1**
(45) Date of publication and mention of the grant of the patent: **03.04.2019**
(21) Application number: 15823409.6
(22) Date of filing: 29.12.2015
(51) Int. Cl.: C08G 63/183, C08G 63/20, C08L 67/02

(54) **BIODEGRADABLE COPOLYESTER COMPOSITION**
BIOLOGISCH ABBAUBARE POLYESTERZUSAMMENSETZUNG
COMPOSITION DE COPOLYESTER BIODÉGRADABLE

(30) Priority: 30.12.2014 TH 1401007925
(43) Date of publication of application: 08.11.2017
(73) Proprietor: PTT Global Chemical Public Company Limited, Bangkok 10900 (TH)
(72) Inventor: TANG-AMORNSUKSAN, Suchada, Bangkok 10900 (TH); POTISATITYUENYONG, Anupat, Bangkok 10900 (TH)
(74) Representative: Patentanwaltskanzlei Matschnig & Forsthuber OG
(86) International application number: PCT/TH2015/000099
(87) International publication number: WO 2016/108768

(56) References cited:
- WO-A1-2010/077809
- US-A- 5 661 193
- US-A1- 2011 097 530
- US-A1- 2012 245 256

## Description

### Summary of the Invention

This invention relates to a biodegradable copolyester composition prepared from polycondensation reaction of diol with aromatic dicarboxylic acid and mixture of aliphatic dicarboxylic acids, wherein the biodegradable copolyester composition comprises:
a) from 40 to 60 mol %, based on total mole of a) and b), of aromatic dicarboxylic acid selected from benzene dicarboxylic acid or ester derivative of said acid;
b) from 40 to 60 mol %, based on total mole of a) and b), of a mixture of aliphatic dicarboxylic acid, wherein b) comprising:
   b1) from 20 to 80 mol %, based on mole of b), of at least one aliphatic dicarboxylic acid having 2 to 6 carbon atoms; and
   b2) from 20 to 80 mol %, based on mole of b), of at least one aliphatic dicarboxylic acid having 7 to 14 carbon atoms;
c) at least one mole equivalent, based on total mole of a) and b), of diol having 2 to 6 carbon atoms;
d) from 0.1 to 0.2 mol %, based on total mole of a), b), c) and d), of alcohol with at least 3 hydroxyl groups,
wherein the composition b1) is selected from oxalic acid, malonic acid, succinic acid, glutaric acid, malonic acid, or fumaric acid.

### Field of the Invention

The present invention relates to chemical and polymer field of a biodegradable copolyester composition.

### Background of the Invention

Aromatic polyester is the polymer with good mechanical property and thermal stability, so can be molded into variety of products such as polyethylene terephthalate which is rigid, transparent, tough, and can be used as fiber, packaging bottle, film; and polybutylene terephthalate which is rigid, heat stable, and can be used for engineering plastic. However, from the environmental point of view, aromatic polyester cannot be degraded by natural microorganism, making an issue in environmental waste after usage.

Aliphatic polyester such as polybutylene succinate, polylactic acid, and polyhydroxyl alkanoate can be degraded by natural microorganism but their mechanical properties, such as rigidity, environmental stability, and heat stability are inferior to those of an aromatic polyester.

There were many attempts to integrate the advantages of aromatic and aliphatic polyester by preparing aliphatic-aromatic copolyester as disclosed in US patent no. 6150490. Said US patent disclosed the preparation of random aliphatic-aromatic copolyester via condensation reaction of diol and dicarboxylic acid using metal catalyst under high temperature and low pressure condition. It also disclosed the method of increasing molecular weight by using diisocyanate substance. The biodegradable polyester composition obtained from said patent has suitable mechanical and thermal properties and could be molded into film.

Examples of commercially aliphatic-aromatic copolyester are polybutylene adipate terephthalate of BASF disclosed in US6046248, US6303677, US414108, and US2011/0034662. Those disclosed patents used adipic acid, terephthalic acid, and butanediol as reactants to obtain copolyester that was tough, elastic, and biodegradable.

Another example is polybutylene succinate terephthalate of DuPont which is produced by adding sulfonated compound as a reactant to obtain sulfonated copolyester with increased biodegradability. It was widely used for compression molding or injecting molding (US patent Nos. 6368710 and 6657017).

Properties and applications of aliphatic-aromatic copolyester depend on type and amount of dicarboxylic acid and type of diol being used as the following examples.

US patent publication no. 2008/0194770 disclosed aliphatic-aromatic copolyester comprising from 49 to 60 mol % of aromatic dicarboxylic acid, from 34 to 51 mol % of aliphatic dicarboxylic organic acid with at least 70 % of sebacic acid. Said copolyester can be biodegraded more than 40 % in 30 days. However, said copolyester comprised high content of aromatic units in order to enhance the rigidity of copolyester which comprised flexible long chain sebacic acid.

US patent publication nos. 2011/0237743, 2011/0237750, and WO2011117203 disclosed process of producing film and foil by using aliphatic-aromatic copolyester. The said copolyester comprised from 60 to 80 mol % of one or more acid selected from succinic acid, adipic acid, sebacic acid, brassylic acid, and azelaic acid, and from 20 to 35 mol % of aromatic dicarboxylic organic acid. Said patents claimed low amount of aromatic composition in copolyester, providing good film restoration without mentioning about rigidity.

US patent publication no. 2012/0245256 showed an example of aliphatic-aromatic copolyester comprising terephthalic acid, 2-methyl succinic acid, and sebacic acid. However, copolyester obtained from said publication showed low crystallization temperature which was lower than 30 °C which was not suitable for polymer molding process. Moreover, said copolymer showed improved hydrolysis stability which may result in difficulty to be degraded.

US patent nos. 8193298, 8193300, and 8461273 disclosed aliphatic-aromatic copolyester focusing on the use of long-chain diacid from natural origin such as sebacic acid, brassylic acid, and azelaic acid prepared from vegetable oil. The use of long-chain diacid molecule gave low thermal properties such as melting point and low crystallization temperature, as a result, at least 50 mol % based on total amount of dicarboxylic acid, of aromatic dicarboxylic acid is needed. Moreover, for the use of renewable ingredients, at least 70 % of natural sebacic acid was needed based on total aliphatic dicarboxylic organic acid. The low thermal property of the resulting copolyester gave limitation for its usage.

Therefore, the present invention aims to prepare a biodegradable copolyester composition that is biodegradable, comprising aromatic dicarboxylic acid and aliphatic dicarboxylic acid that comprising short chain aliphatic dicarboxylic acid with 2 to 6 carbon atoms and long chain with 7 to 14 carbon atoms in optimal ratio. This invention focuses on improvement of thermal property, mechanical property, and biodegradability. Moreover, aliphatic dicarboxylic acid may be prepared from renewable natural resources or petrochemical resources.

### Brief Description of the Drawings

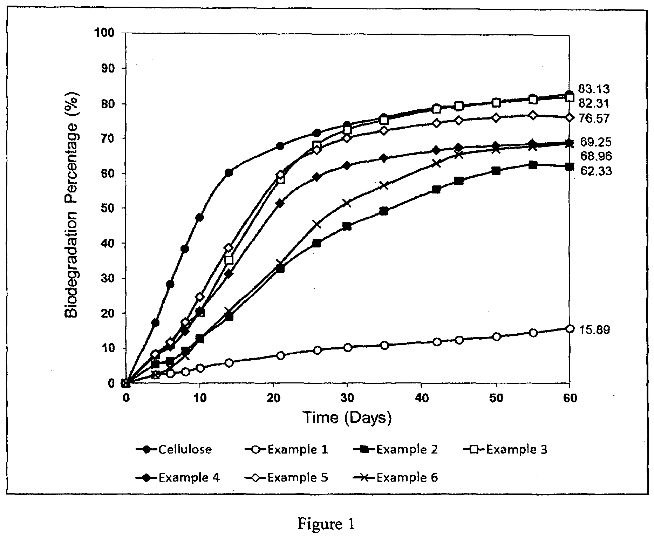

Figure 1 shows graph of biodegradation of copolyesters according to examples in table 6, which have different compositions of dicarboxylic acids.

### Detailed Description of the Invention

### Definitions

Technical terms or scientific terms used herein, have definitions as understood by those having an ordinary skill in the art, unless stated otherwise.

Equipment, apparatus, methods, or chemicals mentioned here means equipment, apparatus, methods or chemicals commonly operated or used by those skilled in the art, unless explicitly stated otherwise that they are equipment, apparatus, methods, or chemicals specifically used in this invention.

The use of the singular or plural nouns with the term "comprising" in the claims or in the specification refers to "one" and also "one or more", "at least one", and "one or more than one".

Throughout this application, the term "about" is used to indicate that any value presented herein may potentially vary or deviate. Such variation or deviation may result from errors of apparatus, methods used in calculation or from individual operator implementing apparatus or methods. These include variations or deviations caused by the changes of physical properties such as molecular weight of polymer.

"Molecular weight enhancing agent" refers to chain extender, chain crosslinker, or a mixture thereof, wherein such chain extender or chain crosslinker for the polyestes comprises of functional groups that can react with hydroxyl functional group and carboxylic acid group in polyester. As used herein, the chain extender is defined by the number of functional groups that can react with polyester, which is two, which results in the linkage of the polymer chains and the molecular weight enhancement without changing the rheological property. Unit "phr" represents the ratio of the molecular weight enhancing agent that is added to the polyester per one hundred parts of polyester. Unless stated otherwise, phr is calculated by weight.

An objective of this invention is the preparation of a biodegradable copolyester composition from polycondensation reaction between diol and aromatic dicarboxylic acid and mixture of short chain aliphatic dicarboxylic acid having 2 to 6 carbon atoms and long chain having 7 to 14 carbon atoms, and comprising alcohol with at least 3 hydroxyl groups.

An objective of this invention is the preparation of a biodegradable copolyester composition from polycondensation reaction between diol having 2 to 6 carbon atoms and aromatic dicarboxylic acid and a mixture of aliphatic dicarboxylic acid having 2 to 6 carbon atoms and aliphatic dicarboxylic acid having 7 to 14 carbon atoms, and comprising alcohol with at least 3 hydroxyl groups. Said copolyester composition has good thermal and mechanical properties and good biodegradability comparing to polyester prepared from one type aliphatic dicarboxylic acid.

The following shows detailed description of the invention without intention to limit the scope of the invention in anyway.

This invention provides the biodegradable copolyester composition comprising:
a) from 40 to 60 mol %, based on total mole of a) and b), of aromatic dicarboxylic acid selected from benzene dicarboxylic acid or ester derivative of said acid;
b) from 40 to 60 mol %, based on total mole of a) and b), of a mixture of aliphatic dicarboxylic acid, wherein b) comprising:
   b1) from 20 to 80 mol %, based on mole of b), of at least one aliphatic dicarboxylic acid having 2 to 6 carbon atoms; and
   b2) from 20 to 80 mol %, based on mole of b), of at least one aliphatic dicarboxylic acid having 7 to 14 carbon atoms;
c) at least one mole equivalent, based on total mole of a) and b), of diol having 2 to 6 carbon atoms;
d) from 0.1 to 2.0 mol %, based on total mole of a), b), c), and d), of alcohol with at least 3 hydroxyl groups,
wherein the composition b1) is selected from oxalic acid, malonic acid, succinic acid, glutaric acid, malonic acid, or fumaric acid.

Preferably, the aromatic dicarboxylic acid according to the composition a) is in the range of 45 to 50 mol % based on total mole of a) and b). Preferably, the composition a) is terephthalic acid.

Preferably, the aliphatic dicarboxylic acid according to composition b) is in the range of 50 to 55 mol % based on total mole of a) and b).

Preferably, the composition b1) is in the range of 20 to 50 mol % based on mole of b), wherein the composition b1) is selected from oxalic acid, malonic acid, succinic acid, glutaric acid, malonic acid, or fumaric acid, more preferable is succinic acid.

Preferably, the composition b2) is in the range of 50 to 80 mol % based on mole of b), wherein composition b2) may be selected from suberic acid, azelaic acid, sebacic acid, or brassylic acid, more preferable is sebacic acid.

Preferably, composition c) may be selected from ethylene glycol, 1,2-propylene glycol, 1,3-propylene glycol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,4-cyclohexanedimethanol, neopentyl glycol, or 2-methyl-1,3-propanediol, more preferable is 1,4-butanediol.

Preferably, composition d) is in the range of 0.3 to 1.0 mol % based on total mole of a), b), c), and d).

In one aspect of the invention, copolyester composition may further comprising molecular weight enhancing agent having difunctional group that can react with hydroxyl functional group and carboxylic acid group of copolyester.

Preferably, molecular weight enhancing agent may be selected from diisocyanate group, blocked isocyanate group, epoxide group, carboxylic acid anhydride group, carbodiimide group, oxozaline group, oxazolinone group, or carbonyl-bis-lactam group, more preferable is diisocyanate group, wherein said molecular weight enhancing agent is in the range of about 0.1 to 5 phr based on total weight of compositions a), b), c), and d).

Synthetic process of copolyester composition according to this invention comprises the following steps:
- adding about 40 to 60 mole % of aromatic dicarboxylic acid, about 40 to 60 mole % of aliphatic dicarboxylic acid based on total mole of aromatic and aliphatic dicarboxylic acid, and at least one mole equivalent of diol based on total mole of aromatic and aliphatic dicarboxylic acid into a reactor;
- adding about 0.1 to 2.0 mol %, based on total mole of the compositions in the previous step, of alcohol with at least 3 hydroxyl groups;
- heating the mixture of the previous step at the temperature about 170 to 250 °C, and stirring for 30 minutes under nitrogen atmosphere;
- adding titanium (IV) butoxide catalyst and stirring said mixture until there is no water condensed from the reactor;
- reducing pressure to be under 40 millibar by using vacuum pump;
- stirring said mixture at the temperature about 170 to 250 °C until obtaining high viscosity polymer or there is no water condensated from the reactor;
- reducing the temperature down to about 130 to 150 °C and adding about 0.1 to 5 phr of molecular weight enhancing agent;
- stirring said mixture until the reaction is completed to obtain copolyester.

The following is the property testing of copolyester obtained from the present invention, wherein testing methods and equipment for these properties are methods and equipment commonly used and not intended to limit the scope of the invention.

Analytical instruments used in thermal properties study of copolyester according to this invention are thermogravimetric analyzer (TGA) using temperature gradient of 20 °C/min under nitrogen purging of 20 mL/min, and differential scanning calorimeter (DSC) using condition provided in table 1. Crystallization temperature (Tc) is identified from crystallization peak temperature of thermogram during first cooling, glass transition temperature (Tg) is considered from thermogram during the second heating.

**Table 1 shows differential scanning calorimeter testing steps and conditions.**

| Step | Temperature (°C) | Heating rate (°C/min) | Time (min) |
|---|---|---|---|
| 1 | 25 to -60 | 20 | - |
| 2 | keep at -60 | - | 5.0 |
| 3 | -60 to 200 | 20 | - |
| 4 | keep at 200 | - | 5.0 |
| 5 | 200 to -10 | 20 | - |
| 6 | -10 to -60 | 20 | - |
| 7 | -60 to 200 | 20 | - |
| 8 | 200 to -10 | 20 | - |
| 9 | -10 to -60 | 20 | - |
| 10 | -60 to 25 | 20 | - |

Molecular weight of copolyester obtained from the present invention was determined by the size separation using gel permeation chromatography (GPC) at 40 °C using tetrahydrofuran (THF) as eluent with flow rate at 1 mL/min. The resulting molecular weight was compared to the standard graph of polystyrene molecular weight. Copolyester from the invention was molded into 3 mm thick sheet by compression molding according to conditions in table 2 for mechanical property testing of copolyester in this invention.

**Table 2 shows steps and conditions of compression molding of copolyester**

| **Step** | **Time (second)** | **Temperature (°C)** | **Pressure (bar)** |
|---|---|---|---|
| Preheat | 400 | 190 | 1 |
| Degassing | 10 | 190 | 30 |
| Compression | 300 | 190 | 30 |
| Cooling | 700 | 40 | 35 |

Tensile testing of copolyester was conducted according to ASTM D638-10 standard on 5 dumbbell shaped specimens.

Impact testing of copolyester was carried out at temperature of -40 °C according to ASTM D256-10 standard on square specimens.

Biodegradation testing of copolyester was conducted according to ISO 14855-1 standard.

### Effect of amount of aromatic dicarboxylic acid to properties of copolyester composition (Reference examples)

Copolyester was synthesized by adding 40 to 60 parts of terephthalic acid in carboxylic acid 100 parts by mole, succinic acid and sebacic acid at the ratio of 1 to 1, and 2 mole equivalent of butanediol based on total dicarboxylic acid in reactor. The reactor was heated at 230 °C and stirred for 30 min under nitrogen gas atmosphere. Titanium (IV) butoxide catalyst was added and said mixture was stirred at 230 °C until there was no water condensed from the reactor. Pressure was reduced using vacuum pump to be under 40 millibar. Said mixture was stirred at temperature of 230 °C until high viscosity polymer was obtained or there was no water condensed from the reactor. Sample was collected for analysis of molecular weight and thermal properties. The result showed that at the same range of molecular weight, the melting temperature and crystallization temperature of polyester increased with an increase of ratio of aromatic dicarboxylic acid in copolyester as shown in table 3.

**Table 3 shows properties of copolyester obtained from the present invention with different amount of aromatic dicarboxylic acid**

| **Terephthalic acid (mol %)** | **Mn** | **MW** | **PDI** | **Tm (°C)** | **Tc (°C)** |
|---|---|---|---|---|---|
| 40 | 14488 | 26856 | 1.86 | 92.8 | 50.8 |
| 46 | 14948 | 26339 | 1.77 | 115.5 | 77.9 |
| 60 | 16037 | 28397 | 1.77 | 125.6 | 90.9 |
| polybutylene-co-terephthalate | 36720 | 72125 | 1.96 | 121.2 | 48.0 |

### Effect of amount of alcohol with at least 3 hydroxyl groups to the copolyester properties (Inventive examples)

Copolyester was synthesized by adding 46 parts of terephthalic acid in carboxylic acid 100 parts by mole, succinic acid and sebacic acid of 1 to 1, 2 mole equivalent of butanediol based on total of dicarboxylic acid, and 0.3 to 1.0 mol % glycerol in the reactor. The reactor was heated at 230 °C and stirred for 30 min under nitrogen gas atmosphere. Titanium (IV) butoxide catalyst was added and said mixture was stirred at 230 °C until there was no water condensed from the reactor. Pressure was reduced using vacuum pump to be under 40 millibar. Said mixture was stirred at temperature of 230 °C until high viscosity polymer was obtained or there was no water condensed from the reactor. The result showed that molecular weight and molecular weight distribution increased with increasing of the amount of alcohol with at least 3 hydroxyl groups, and was found that crystallization temperature is related to the alcohol content with at least 3 hydroxyl groups as shown in table 4.

**Table 4 shows properties of copolyester obtained from the present invention with different amount of alcohol with at least 3 hydroxyl groups.**

| **Glycerol (mol%)** | **Mn** | **Mw** | **PDI** | **Tm (°C)** | **Tc (°C)** |
|---|---|---|---|---|---|
| 0 | 14948 | 26339 | 1.77 | 115.5 | 77.9 |
| 0.3 | 11555 | 24744 | 2.14 | 109.5 | 74.8 |
| 0.5 | 20637 | 60032 | 2.91 | 109.7 | 59.9 |
| 1.0 | 25729 | 177442 | 6.89 | 109.5 | 57.2 |

### Study of properties of copolyester with different dicarboxylic acid composition (Reference examples)

An objective of the present invention is to obtain copolyester with good thermal property, mechanical property, and biodegradability comparing to polyester with similar structure. Therefore, other polyester such as polybutylene succinate-co-terephthalate, polybutylene sebacate-co-terephthalate, and polybutylene adipate-co-terephthalate were used as comparative examples. Said comparative examples were synthesized by the same process such as polybutylene succinate-co-terephthalate (PBST), polybutylene sebacate-co-terephthalate (PBSeT), or commercial grade such as polybutylene adipate-co-terephthalate (PBAT).

Copolyester was synthesized by adding 50 parts of terephthalic acid in dicarboxylic acid 100 parts by mole, 0 to 50 parts of succinic acid and 0 to 50 parts of sebacic acid, and 2 mole equivalents of butanediol based on total mole of dicarboxylic acid in the reactor. The reactor was heated at 230 °C and stirred for 30 min under nitrogen gas condition. Titanium (IV) butoxide catalyst was added and said mixture was stirred at 230 °C until there was no water condensed from the reactor. Pressure was reduced to be under 40 millibar using vacuum pump. Said mixture was stirred at temperature of 230 °C until high viscosity polymer was obtained or there was no water condensed from the reactor. Temperature was reduced to 150 °C. Molecular weight enhancing agent, hexamethylene diisocyanate, was added at the amount of 1 phr. Said mixture was stirred for 30 minutes. The product was analyzed for molecular weight, thermal property, and mechanical property as shown in table 5 and table 6. Biodegradation was analyzed and shown in figure 1.

**Table 5 shows thermal properties of copolyester with different amount of dicarboxylic acid**

| **Example** | **% by mole of dicarboxylic acid** | | | **Mn** | **Mw** | **PDI** | **Tg** | **Tm** | **Tc** | **Td** |
|---|---|---|---|---|---|---|---|---|---|---|
| | terephthalic | succinic | sebacic | | | | **(°C)** | **(°C)** | **(°C)** | **(°C)** |
| 1 | 50 | 50 | 0 | 35049 | 168172 | 4.8 | -15.3 | 127.5 | 66.5 | 381.4 |
| 2 | 50 | 40 | 10 | 40926 | 195592 | 4.78 | -22.1 | 126.7 | 83.1 | 391.0 |
| 3 | 50 | 20 | 30 | 45553 | 167075 | 3.67 | -31.0 | 119.7 | 61.6 | 392.7 |
| 4 | 50 | 10 | 40 | 46827 | 174431 | 3.73 | -33.4 | 119.6 | 75.3 | 396.9 |
| 5 | 50 | 0 | 50 | 34366 | 102760 | 2.99 | -35.3 | 119.6 | 59.9 | 397.2 |
| 6 | polybutylene adipate-co-terephthalate | | | 36720 | 72125 | 1.96 | -30 | 121.2 | 48.0 | 356 |

From table 5, when comparing properties of copolyester with different amount of dicarboxylic acid composition, it is found that melting temperature (Tm) and glass transition temperature (Tg) reduced according to proportion of sebacic acid. When comparing example 1 to 5 with comparative example 6, it is found that copolyester prepared from mixture of succinic acid and sebacic acid has crystallization temperature (Tc) and degradation temperature (Td) significantly higher than copolyester prepared from adipic acid.

**Table 6 shows mechanical properties of copolyester with different amount of dicarboxylic acid**

| **Example** | **% by mole of dicarboxylic acid** | | | **Tensile strength (MPa)** | | **% Elongation** | | **Impact strength at -40 °C (J/m)** | |
|---|---|---|---|---|---|---|---|---|---|
| | terephthalic | succinic | sebacic | Avg | SD | Avg | SD | Avg | SD |
| 1 | 50 | 50 | 0 | 11.5 | 0.672 | 260 | 33 | 32.1 | 4.8 |
| 2 | 50 | 40 | 10 | 15.9 | 0.305 | 460 | 16 | 37.6 | 4.6 |
| 3 | 50 | 20 | 30 | 15.1 | 0,67 | 600 | 38 | 36.2 | 7.7 |
| 4 | 50 | 10 | 40 | 16.4 | 1.1 | 600 | 43 | 38.0 | 14.1 |
| 5 | 50 | 0 | 50 | 10.8 | 0.525 | 520 | 28 | - | - |
| 6 | polybutylene adipate-co-terephthalate | | | 14 | 0.216 | 520 | 11 | 36.0 | 4.0 |

From table 6, copolyester containing mixture of aliphatic dicarboxylic acid which are sebacic acid and succinic acid in their structures in example 2 to 5 have elongation and impact strength better than copolyester comprising one type aliphatic dicarboxylic acid composition which is succinic acid such as polybutylene succinate-co-terephthalate (PBST) in example 1, and said properties are similar to polybutylene adipate-co-terephthalate (PBAT) in example 6.

When comparing example 2 to 4 which are copolyester that has composition of succinic acid and sebacic acid in polymer structure to example 1 which is polybutylene succinate-co-terephthalate (PBST) and example 5 which is polybutylene sebacate-co-terephthalate (PBSeT) and example 6 which is polybutylene adipate-co-terephthalate (PBAT), it was found that copolyester with mixture of succinic acid and sebacic acid in their structure have tensile strength significantly higher than polybutylene succinate-co-terephthalate, polybutylene sebacate-co-terephthalate, and polybutylene adipate-co-terephthalate.

Figure 1 shows graph of biodegradability of copolyester according to examples in table 6 which have different type of dicarboxylic acid. It was found that copolyester with mixture of aliphatic dicarboxylic acid which are sebacic acid and succinic acid in their structure have better biodegradability than copolyester comprising one type aliphatic dicarboxylic acid which is succinic acid alone. Moreover, copolyester according to example 3 and example 4 shows higher biodegradation percentage compared to example 6.

### Best Mode of the Invention

Best mode or preferred embodiment of the invention is as provided in the description of the invention.

## Claims

1. A biodegradable copolyester composition comprising:
a) from 40 to 60 mol %, based on total mole of a) and b), of aromatic dicarboxylic acid selected from benzene dicarboxylic acid or ester derivative of said acid;
b) from 40 to 60 mol %, based on total mole of a) and b), of a mixture of aliphatic dicarboxylic acid, wherein b) comprising:
b1) from 20 to 80 mol %, based on mole of b), of at least one aliphatic dicarboxylic acid having 2 to 6 carbon atoms; and
b2) from 20 to 80 mol %, based on mole of b), of at least one aliphatic dicarboxylic acid having 7 to 14 carbon atoms;
c) at least one mole equivalent, based on total mole of a) and b), of diol having 2 to 6 carbon atoms;
d) from 0.1 to 2.0 mol %, based on total mole of a), b), c), and d), of alcohol with at least 3 hydroxyl groups
wherein the composition b1) is selected from oxalic acid, malonic acid, succinic acid, glutaric acid, malonic acid, or fumaric acid.

2. The biodegradable copolyester composition according to claim 1, wherein the aromatic dicarboxylic acid according to the composition a) is terephthalic acid.

3. The biodegradable copolyester composition according to claim 1 or 2, wherein the aromatic dicarboxylic acid according to the composition a) is in the range of 45 to 50 mol % based on total mole of a) and b).

4. The biodegradable copolyester composition according to claim 1, wherein the aliphatic dicarboxylic acid according to the composition b) is in the range of 50 to 55 mol % based on total mole of a) and b).

5. The biodegradable copolyester composition according to claim 1, wherein the composition b1) is succinic acid.

6. The biodegradable copolyester composition according to claims 1 or 5, wherein the composition b1) is in the range of 20 to 50 mol % based on mole of b).

7. The biodegradable copolyester composition according to claim 1, wherein the composition b2) is selected from suberic acid, azelaic acid, sebacic acid, or brassylic acid.

8. The biodegradable copolyester composition according to claim 7, wherein the composition b2) is sebacic acid.

9. The biodegradable copolyester composition according to anyone of claims 1, 7 to 8, wherein the composition b2) is in the range of 50 to 80 mol % based on mole of b).

10. The biodegradable copolyester composition according to claim 1, wherein the composition c) is selected from ethylene glycol, 1,2-propylene glycol, 1,3-propylene glycol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,4-cyclohexanedimethanol, neopentyl glycol, or 2-methyl-1,3-propanediol.

11. The biodegradable copolyester composition according to claim 10, wherein the composition c) is 1,4-butanediol.

12. The biodegradable copolyester composition according to claim 1, wherein the composition d) is in the range of 0.3 to 1.0 mol % based on total mole of a), b), c), and d).

13. The biodegradable copolyester composition according to anyone of claims 1 to 12, further comprising molecular weight enhancing agent having difunctional group that can react with hydroxyl functional group and carboxylic acid group of copolyester.

14. The biodegradable copolyester composition according to claim 13, wherein the molecular weight enhancing agent is selected from diisocyanate group, blocked isocyanate group, epoxide group, carboxylic acid anhydride group, carbodiimide group, oxazoline group, oxazolinone group, or carbonyl-bis-lactam group.

15. The biodegradable copolyester composition according to claim 14, wherein the molecular weight enhancing agent is diisocyanate group.

16. The biodegradable copolyester composition according to anyone of claims 13 to 15, wherein the molecular weight enhancing agent is in the range of 0.1 to 5 phr based on total weight of compositions a), b), c), and d).

17. Polyester comprising the biodegradable copolyester composition according to anyone of claims 1 to 16.

18. Mixture of polymer comprising the biodegradable copolyester composition according to anyone of claims 1 to 16.

## Patentansprüche

1. Biologisch abbaubare Copolyesterzusammensetzung, umfassend:
a) zu 40 bis 60 Mol%, basierend auf den Gesamtmol von a) und b), eine aromatische Dicarbonsäure, die ausgewählt ist aus Benzoldicarbonsäure oder einem Esterderivat der Säure;
b) zu 40 bis 60 Mol%, basierend auf den Gesamtmol von a) und b), eine Mischung aus aliphatischer Dicarbonsäure, wobei b) umfasst:
b1) zu 20 bis 80 Mol%, basierend auf den Gesamtmol von b), mindestens eine aliphatische Dicarbonsäure mit 2 bis 6 Kohlenstoffatomen; und
b2) zu 20 bis 80 Mol%, basierend auf den Gesamtmol von b), mindestens eine aliphatische Dicarbonsäure mit 7 bis 14 Kohlenstoffatomen;
c) mindestens ein Moläquivalent, basierend auf den Gesamtmol von a) und b), eines Diols mit 2 bis 6 Kohlenstoffatomen;
d) zu 0,1 bis 2,0 Mol%, basierend auf den Gesamtmol von a), b), c) und d) einen Alkohol mit mindestens 3 Hydroxylgruppen,
wobei die Zusammensetzung b1) ausgewählt ist aus Oxalsäure, Malonsäure, Bernsteinsäure, Glutarsäure, Malonsäure oder Fumarsäure.

2. Biologisch abbaubare Copolyesterzusammensetzung nach Anspruch 1, wobei die aromatische Dicarbonsäure gemäß der Zusammensetzung a) Terephthalsäure ist.

3. Biologisch abbaubare Copolyesterzusammensetzung nach Anspruch 1 oder 2, wobei die aromatische Dicarbonsäure gemäß der Zusammensetzung a) im Bereich von 45 bis 50 Mol, basierend auf den Gesamtmol von a) und b), liegt.

4. Biologisch abbaubare Copolyesterzusammensetzung nach Anspruch 1, wobei die aliphatische Dicarbonsäure gemäß der Zusammensetzung b) im Bereich von 50 bis 55 Mol%, basierend auf den Gesamtmol von a) und b), liegt.

5. Biologisch abbaubare Copolyesterzusammensetzung nach Anspruch 1, wobei Zusammensetzung b1) Bernsteinsäure ist.

6. Biologisch abbaubare Copolyesterzusammensetzung nach einem der Ansprüche 1 oder 5, wobei die Zusammensetzung b1) im Bereich von 20 bis 50 Mol%, basierend auf den Gesamtmol von b), liegt.

7. Biologisch abbaubare Copolyesterzusammensetzung nach Anspruch 1, wobei die Zusammensetzung b2) ausgewählt ist aus Suberinsäure, Azelainsäure, Sebacinsäure oder Brassylsäure.

8. Biologisch abbaubare Copolyesterzusammensetzung nach Anspruch 7, wobei die Zusammensetzung b2) Sebacinsäure ist.

9. Biologisch abbaubare Copolyesterzusammensetzung nach einem der Ansprüche 1, 7 bis 8, wobei die Zusammensetzung b2) im Bereich von 50 bis 80 Mol%, basierend auf den Gesamtmol von b), liegt.

10. Biologisch abbaubare Copolyesterzusammensetzung nach Anspruch 1, wobei die Zusammensetzung ausgewählt ist aus Ethylenglycol, 1,2-Propylenglycol, 1,3-Propylenglycol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecandiol, 1,4-Cyclohexandimethanol, Neopentylglycol oder 2-Methyl-1,3-propandiol.

11. Biologisch abbaubare Copolyesterzusammensetzung nach Anspruch 10, wobei die Zusammensetzung c) 1,4-Butandiol ist.

12. Biologisch abbaubare Copolyesterzusammensetzung nach Anspruch 1, wobei die Zusammensetzung im Bereich von 0,3 bis 1,0 Mol%, basierend auf den Gesamtmol von a), b), c) und d), liegt.

13. Biologisch abbaubare Copolyesterzusammensetzung nach einem der Ansprüche 1 bis 12, ferner ein Molekulargewicht erhöhendes Mittel mit einer difunktionellen Gruppe umfassend, die mit hydroxylfunktionellen Gruppen und Carbonsäuregruppen eines Copolyesters reagieren kann.

14. Biologisch abbaubare Copolyesterzusammensetzung nach Anspruch 13, wobei das Molekulargewicht erhöhende Mittel ausgewählt ist aus einer Diisocyanatgruppe, einer blockierten Isocyanatgruppe, einer Epoxidgruppe, einer Carbonsäureanhydridgruppe, einer Carbodiimidgruppe, einer Oxazolingruppe, einer Oxazolinongruppe oder einer Carbonyl-bis-lactamgruppe.

15. Biologisch abbaubare Copolyesterzusammensetzung nach Anspruch 14, wobei das Molekulargewicht erhöhende Mittel eine Diisocyanatgruppe ist.

16. Biologisch abbaubare Copolyesterzusammensetzung nach einem der Ansprüche 13 bis 15, wobei das Molekulargewicht erhöhende Mittel im Bereich von 0,1 bis 5 phr, basierend auf dem Gesamtgewicht der Zusammensetzungen a), b), c) und d), liegt.

17. Polyester, die biologisch abbaubare Copolyesterzusammensetzung nach einem der Ansprüche 1 bis 16 umfassend.

18. Polymermischung, die biologisch abbaubare Copolyesterzusammensetzung nach einem der Ansprüche 1 bis 16 umfassend.

## Revendications

1. Composition de copolyester biodégradable comprenant :
a) de 40 à 60 % en moles, sur la base des moles totales de a) et b), d'acide dicarboxylique aromatique choisi parmi l'acide dicarboxylique benzénique ou un dérivé ester dudit acide ;
b) de 40 à 60 % en moles, sur la base des moles totales de a) et b) d'un mélange d'acide dicarboxylique aliphatique, b) comprenant :
b1) de 20 à 80 % en moles, sur la base des moles de b), d'au moins un acide dicarboxylique aliphatique ayant 2 à 6 atomes de carbone ; et
b2) de 20 à 80 % en moles, sur la base des moles de b), d'au moins un acide dicarboxylique aliphatique ayant 7 à 14 atomes de carbone ;
c) au moins un équivalent molaire, sur la base des moles totales de a) et b), de diol ayant de 2 à 6 atomes de carbone ;
d) de 0,1 à 2,0 % en moles, sur la base des moles totales de a), b), c) et d), d'alcool ayant au moins 3 groupes hydroxyle,
dans laquelle la composition b1) est choisie parmi l'acide oxalique, l'acide malonique, l'acide succinique, l'acide gluratique, l'acide malonique ou l'acide fumarique.

2. Composition de copolyester biodégradable selon la revendication 1, dans laquelle l'acide dicarboxylique aromatique selon la composition a) est l'acide téréphtalique.

3. Composition de copolyester biodégradable selon l'une des revendications 1 ou 2, dans laquelle l'acide dicarboxylique aromatique selon la composition a) se situe dans la plage de 45 à 50 % en moles sur la base des moles totales de a) et b).

4. Composition de copolyester biodégradable selon la revendication 1, dans laquelle l'acide dicarboxylique aliphatique selon la composition b) se situe dans la plage de 50 à 55 % en moles sur la base des moles totales de a) et b).

5. Composition de copolyester biodégradable selon la revendication 1, dans laquelle la composition b1) est l'acide succinique.

6. Composition de copolyester biodégradable selon l'une des revendications 1 ou 5, dans laquelle la composition b1) se situe dans la plage de 20 à 50 % en moles sur la base des moles de b).

7. Composition de copolyester biodégradable selon la revendication 1, dans laquelle la composition b2) est choisie parmi l'acide subérique, l'acide azélaïque, l'acide sébacique ou l'acide brassylique.

8. Composition de copolyester biodégradable selon la revendication 7, dans laquelle la composition b2) est l'acide sébacique.

9. Composition de copolyester biodégradable selon l'une quelconque des revendications 1, 7 ou 8, dans laquelle la composition b2) se situe dans la plage de 50 à 80 % en moles sur la base des moles de b).

10. Composition de copolyester biodégradable selon la revendication 1, dans laquelle la composition c) est choisie parmi l'éthylène glycol, le 1,2-propylène glycol, le 1,3-propylène glycol, le 1,4-butanediol, le 1,5-pentanediol, le 1,6-hexanediol, le 1,7-heptanediol, le 1,8-octanediol, le 1,9-nonanediol, le 1,10-décanediol, le 1,11-undécanediol, le 1,12-dodécanediol, le 1,4-cyclohexanediméthanol, le néopentyl glycol ou le 2-méthyl-1,3-propane diol.

11. Composition de copolyester biodégradable selon la revendication 10, dans laquelle la composition c) est le 1,4-butanediol.

12. Composition de copolyester biodégradable selon la revendication 1, dans laquelle la composition d) se situe dans la plage de 0,3 à 1,0 % en moles sur la base des moles totales de a), b), c) et d).

13. Composition de copolyester biodégradable selon l'une quelconque des revendications 1 à 12, comprenant en outre un agent d'augmentation de la masse moléculaire ayant un groupe difonctionnel qui peut réagir avec un groupe fonctionnel hydroxyle et un groupe acide carboxylique du copolyester.

14. Composition de copolyester biodégradable selon la revendication 13, dans laquelle l'agent d'augmentation de la masse moléculaire est choisi parmi un groupe diisocyanate, un groupe isocyanate bloqué, un groupe époxyde, un groupe anhydride d'acide carboxylique, un groupe carbodiimide, un groupe oxazoline, un groupe oxazolinone ou un groupe carbonyl-bis-lactame.

15. Composition de copolyester biodégradable selon la revendication 14, dans laquelle l'agent d'augmentation de la masse moléculaire est un groupe diisocyanate.

16. Composition de copolyester biodégradable selon l'une quelconque des revendications 13 à 15, dans laquelle l'agent d'augmentation de la masse moléculaire se situe dans la plage de 0,1 à 5 phr sur la base du poids total de composition des compositions a), b), c) et d).

17. Polyester comprenant la composition de copolyester biodégradable selon l'une quelconque des revendications 1 à 16.

18. Mélange de polymère comprenant la composition de copolyester biodégradable selon l'une quelconque des revendications 1 à 16.
